# EUROPÄISCHE PATENTSCHRIFT

(11) **EP 3 924 202 B1**
(45) Veröffentlichungstag und Bekanntmachung des Hinweises auf die Patenterteilung: **25.10.2023**
(21) Anmeldenummer: 20706088.0
(22) Anmeldetag: 05.02.2020
(51) Int. Cl.: B60K 7/00, B62D 1/28, B66F 9/06

(54) **MOBILTEIL**
MOBILE ELEMENT
ÉLÉMENT MOBILE

(30) Priorität: 12.02.2019 DE 102019000978
(43) Veröffentlichungstag der Anmeldung: 22.12.2021
(73) Patentinhaber: SEW-EURODRIVE GmbH & Co. KG, 76646 Bruchsal (DE)
(72) Erfinder: SCHMIDT, Josef, 76676 Graben-Neudorf (DE); TUSKAN, Andreas, 75045 Walzbachtal (DE)
(86) Internationale Anmeldenummer: PCT/EP2020/025050
(87) Internationale Veröffentlichungsnummer: WO 2020/164804

(56) Entgegenhaltungen:
- FR-A1- 3 065 939
- JP-A- H 107 043
- US-A1- 2017 080 846

## Beschreibung

Die Erfindung betrifft ein Mobilteil.

Es ist allgemein bekannt, dass ein Mobilteil zum Verfahren auf einer Verfahrfläche vorgesehen ist.

**Aus der** DE 10 2018 107 226 A1 **ist ein Transportwagen bekannt.**

**Aus der** DE 41 08 333 A1 **ist ein Fahrzeug mit Fahrwerk bekannt.**

**Aus der** DE 10 2016 107 451 A1 **ist eine selbstfahrende Transport- und Hubfahreinheit bekannt und ein Verfahren zum Bewegen von Objekten mittels der Transport- und Hubfahreinheit.**

**Aus der** US 2017/080846 A1 **ist als nächstliegender Stand der Technik eine mobile Plattform für den Materialtransport bekannt.**

**Aus der** FR 3 065 939 A1 **ist ein Roboter zum Ladungstransfer bekannt.**

**Aus der** JP H10 7043 A **ist ein unbekanntes Förderfahrzeug bekannt.**

Der Erfindung liegt daher die Aufgabe zugrunde, ein Mobilteil weiterzubilden, wobei ein sicheres Antreiben des Mobilteils ermöglicht sein soll.

Erfindungsgemäß wird die Aufgabe bei dem Mobilteil nach den in Anspruch 1 angegebenen Merkmalen gelöst.

Wichtige Merkmale der Erfindung bei dem Mobilteil, insbesondere bei dem auf einer Verfahrfläche bewegbares Mobilteil,
wobei das Mobilteil ein Gestell, insbesondere Lastaufnahmemittel, aufweist,
wobei am Gestell eine erste Achse (6) angeordnet oder ausgebildet ist,
an welcher eine erste Schwinge drehbar gelagert ist,
wobei an der ersten Schwinge eine Antriebseinheit und eine Rolleneinheit angeordnet ist,
wobei die Rolleneinheit von der ersten Achse (6) beabstandet ist und die Antriebseinheit von der ersten Achse (6) beabstandet ist,
wobei die erste Achse (6) an der ersten Schwinge zwischen der Antriebseinheit und der Rolleneinheit angeordnet ist,
wobei die Antriebseinheit ein von einem Elektromotor direkt oder über ein Getriebe angetriebenes Antriebsrad aufweist,
wobei die Rolleneinheit eine drehbar gelagerte Stützrolle oder Lenkrolle aufweist.

Von Vorteil ist dabei, dass auch bei Unebenheiten der Verfahrfläche oder beim Übergang von einer horizontalen Verfahrebene zur schiefen Ebene alle Räder und Rollen Kontakt zur Verfahrfläche aufrechterhalten können. Somit werden auch Antriebskraft oder Bremskraft sicher übertragen. Das Betreiben des Mobilteils ist somit mit hoher Sicherheit möglich.

Besonders vorteilhaft wirkt die Erfindung auf die aufgenommene Last. Denn die aufgenommene Last ist auf einer Aufnahmeplatte anordenbar, die zwar von von einem Linearaktor oder Linearantrieb höhenverstellbar ist, aber keine wesentlichen Kippbewegungen ausführt, auch wenn die erste Schwinge infolge der unebenheiten der Fahrebene aus ihrer horizontalen und/oder zur Fahrebene parallelen Sollage ausgelenkt wird. Insbesondere ist die Aufnahmeplatte und somit die auf ihr aufgenommene Last im Wesentlichen also rein vertikal verstellbar angeordnet. Dabei ist die vertikale Richtung senkrecht zur Schwingenachse ausgerichtet und/oder senkrecht zur Drehachse des Antriebsrads ausgerichtet.

Das Mobilteil wird bevorzugt für intralogistische Aufträge innerhalb einer industriellen Anlage verwendet.

Bei einer vorteilhaften Ausgestaltung ist die jeweilige Rolleneinheit außerhalb des Gestells angeordnet, insbesondere in Fahrtrichtung außerhalb des Gestells angeordnet. Von Vorteil ist dabei, dass der bodenabstand des Gestells, also der Abstand des Gestelles zur Verfahrfläche, äußerst gering wählbar ist.

Bei einer alternativen vorteilhaften Ausgestaltung sind der Elektromotor und das Antriebsrad außerhalb des Gestells angeordnet, insbesondere in Querrichtung zur Fahrtrichtung außerhalb des Gestells angeordnet. Von Vorteil ist dabei, dass die Antriebsräder möglichst weit voneinander beabstandbar sind, und somit eine hohe Verkippsicherheit des Mobilteils erreichbar ist.

**Erfindungsgemäß** ist am Gestell zumindest eine dritte Achse angeordnet,
an welcher eine dritte Schwinge drehbar gelagert ist, an welcher zwei voneinander beabstandet zweite Achsen angeordnet sind, insbesondere wobei die dritte Achse an der dritten Schwinge zwischen den beiden zweiten Achsen angeordnet ist,
wobei an jeder zweiten Achse jeweils eine zweite Schwinge drehbar gelagert ist, wobei zwei voneinander beabstandete zweite Rolleneinheiten an der zweiten Schwinge angeordnet, insbesondere befestigt, sind, wobei die zweite Achse an der zweiten Schwinge zwischen den beiden zweiten Rolleneinheiten angeordnet ist,
wobei jede der beiden zweiten Rolleneinheiten jeweils eine drehbar gelagerte Stützrolle oder Lenkrolle aufweist,
insbesondere wobei die dritte Achse und die zweite Achse in Querrichtung, also senkrecht, zur ersten Achse gerichtet ist und/oder wobei die zweite Schwinge beabstandet ist von dem Antriebsrad und/oder wobei das Antriebsrad zwischen der zweiten Achse und der an der ersten Schwinge direkt angeordneten oder mittels der weiteren Schwinge angeordneten Rolleneinheit angeordnet ist. Von Vorteil ist dabei, dass

Bei einer vorteilhaften Ausgestaltung ist die jeweilige Rolleneinheit an der Unterseite der jeweiligen Schwinge angeordnet. Von Vorteil ist dabei, dass ein Schutz gegen herabfallende Gegenstände realisierbar ist. Außerdem ist auch bei locker sitzenden Verbindungsmitteln, wie Schrauben, eine Sicherheit durch Andrücken der Schwinge auf die Rolleneinheit vorhanden. Erst wenn eine sehr große seitliche Abweichung auftritt, ist die Sicherheit nicht mehr gewährleistbar.

Bei einer vorteilhaften Ausgestaltung weist die oder die jeweilige Rolleneinheit eine Aufnahmeeinheit auf, an welcher die Stützrolle drehbar gelagert aufgenommen ist und die Aufnahmeeinheit an der ersten Schwinge befestigt ist. Von Vorteil ist dabei, dass eine einfache und kostengünstige Befestigung erreichbar ist.

Bei einer alternativen vorteilhaften Ausgestaltung weist die Rolleneinheit Aufnahmeeinheit auf, an welcher eine Lenkeinheit, insbesondere um eine horizontale Achse, drehbar gelagert aufgenommen ist, in welcher die Lenkrolle drehbar gelagert aufgenommen ist. Von Vorteil ist dabei, dass die Lenkeinheit einfach und kostengünstig realisierbar ist.

Bei einer vorteilhaften Ausgestaltung ist auf dem Gestell eine von einem Linearaktor oder Linearantrieb höhenverstellbar angeordnete Aufnahmeplatte angeordnet. Von Vorteil ist dabei, dass die aufgenommene Last auf verschiedene Höhen bringbar ist, insbesondere während des Verfahrens des Mobilteils auf der Verfahrfläche.

Bei einer vorteilhaften Ausgestaltung ist die jeweilige Schwinge aus Stahl gefertigt. Von Vorteil ist dabei, dass eine hohe Stabilität erreichbar ist.

Bei einer vorteilhaften Ausgestaltung weist der Elektromotor Servomotor oder Synchronmotor ist und einen Winkelsensor zur Erfassung der Drehlage des Rotors des Elektromotors auf. Von Vorteil ist dabei, dass eine möglichst genaue Lenkung bewirkbar ist.

Bei einer vorteilhaften Ausgestaltung weist das Getriebe ein Winkelgetriebe ist. Von Vorteil ist dabei, dass die erste Achse mit einer hohen Tragfähigkeit ausstattbar ist, da das Winkelgetriebe ein nur geringfügiges Hervorkraken der ersten Achse aus dem Gestell heraus ermöglicht.

Die Erfindung wird nun anhand von schematischen Abbildungen näher erläutert:

In der Figur 1 ist ein nicht erfindungsgemäßes Mobilteil in Schrägansicht dargestellt.

In der Figur 2 ist nicht erfindungsgemäßes Mobilteil in Draufsicht dargestellt.

In der Figur 3 ist nicht erfindungsgemäßes Mobilteil in Vorderansicht dargestellt.

In der Figur 4 ist ein erfindungsgemäßes Mobilteil in Vorderansicht dargestellt.

In der Figur 5 ist ein zweites erfindungsgemäßes Mobilteil in Schrägansicht dargestellt.

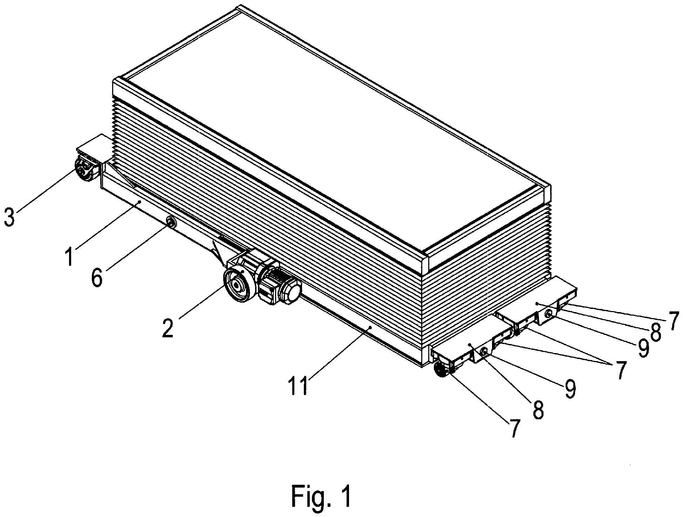

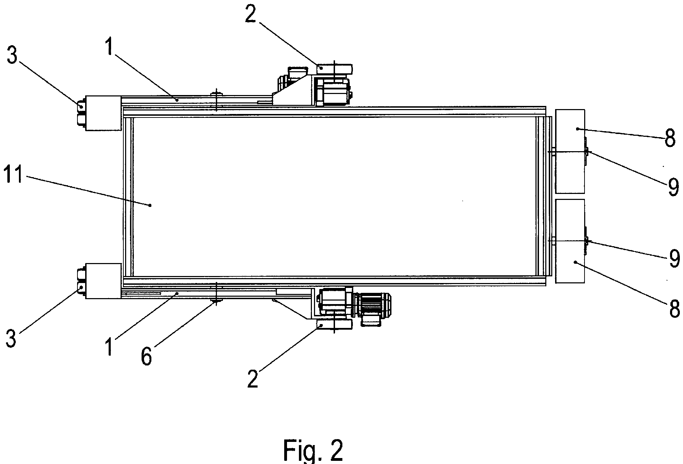

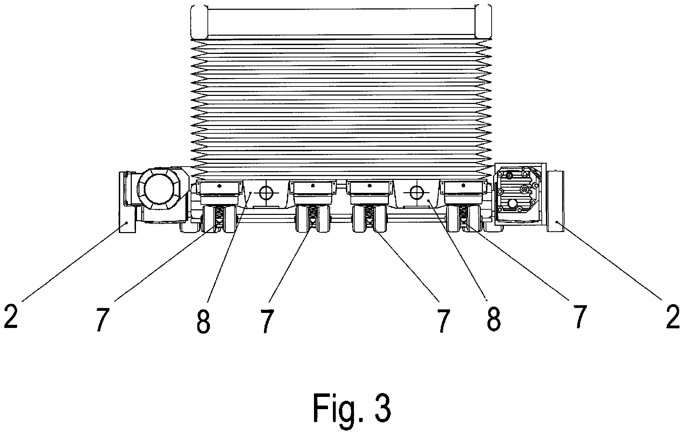

Wie in den Figuren 1 bis 3 (NICHT ERFINDUNGSGEMÄß) dargestellt, weist das Mobilteil ein Gestell 11, insbesondere

Lastaufnahmemittel, auf, an welchem eine Achse 6 ausgebildet ist oder angeordnet ist.

Die Achse 6 ist parallel zur Verfahrfläche für das Mobilteil ausgerichtet, wenn diese eben ausgeführt ist.

Eine erste Schwinge 1 ist drehbar gelagert an dieser ersten Achse 6. Die erste Schwinge 1 ist also innerhalb einer von der horizontalen Richtung und Fahrtrichtung aufgespannten Ebene.

An einem Endbereich der ersten Schwinge 1 ist ein von einem Elektromotor direkt oder über ein Getriebe angetriebenes Antriebsrad 2 angeordnet. Der Elektromotor bildet mit dem Antriebsrad 2 eine Antriebseinheit.

Die Drehachse des Antriebsrads 2 ist parallel zur ersten Achse 1, also parallel zur Querrichtung zur Fahrtrichtung des Mobilteils ausgerichtet.

Am anderen Endbereich der ersten Schwinge 1 ist eine Stützrolle 3 angeordnet, die drehbar gelagert ist an diesem Endbereich der ersten Schwinge 1, wobei die Drehrichtung der Stützrolle 3 parallel zur Drehachse des Antriebsrads 2 ausgerichtet ist.

Somit folgt das Antriebsrad 2 immer den Unebenheiten der Verfahrfläche, wobei die erste Schwinge 1 abhängig von den Unebenheiten ihre Drehlage annimmt, indem das Gewicht des Gestells 11 zumindest teilweise über die Drehachse und die erste schwinge 1 zum Antriebsrad 2 sowie zum Stützrolle 3 geleitet wird.

Ebenso ist in Querrichtung zur Fahrtrichtung beabstandet von der ersten Schwinge 1 eine weitere erste Schwinge 1 angeordnet, die ebenfalls an der ersten Achse 6, insbesondere an deren anderem Endbereich, drehbar gelagert ist und an deren Endbereich ein weiteres von einem Elektromotor direkt oder über ein Getriebe angetriebenes Antriebsrad 2 angeordnet ist. Am anderen Endbereich dieser weiteren ersten Schwinge 1 ist eine weitere Stützrolle 3 angeordnet.

In Fahrtrichtung beabstandet von der ersten Achse 6, insbesondere und auch vom Antriebsrad 2 sind weitere Stützrollen 7 vorgesehen, welche ebenfalls an zweiten Schwingen 8 drehbar angeordnet sind, wobei die zweiten Schwingen 8 drehbar an zweiten Achsen 9 des Gestells 11 gelagert sind.

Wie in Figur 1 dargestellt (NICHT ERFINDUNGSGEMÄß), ist eine vierte Achse 9, die entgegengesetzt zur Fahrtrichtung des Mobilteils am Gestell 11 hervorragt und in Fahrtrichtung beabstandet ist von der ersten Achse 6, insbesondere und auch vom Antriebsrad 2.

An der vierten Achse 9 ist eine zweite Schwinge 8 drehbar gelagert. Diese zweite Schwinge 8 ist somit in einer Ebene drehbar, welche die Querrichtung zur Fahrtrichtung des Mobilteils enthält und die horizontale Richtung.

Dabei ist unter horizontaler Richtung hier stets eine einzige zum Gestell 11 feste Richtung zu verstehen. Bei ebener Verfahrfläche ist die horizontale Richtung dann die Normalenrichtung zur ebenen Verfahrfläche, also die senkrecht zur Fahrtrichtung und senkrecht zur Querrichtung ausgerichtete Richtung. Ebenso sind Fahrtrichtung und Querrichtung fest zum Gestell 11 ausgerichtete Richtungen, die parallel zur Verfahrfläche sind, wenn diese eben ausgeführt ist.

An der zweiten Schwinge 8 sind voneinander beabstandete Stützrollen 7 drehbar gelagert.

Vorzugswiese ist die Drehachse der Stützrollen 7 parallel zur ersten Achse 6.

Wie in Figur 1 gezeigt, ist auch eine weitere vierte Achse 9 parallel zur ersten vierten Achse 9
vorgesehen, die entgegengesetzt zur Fahrtrichtung des Mobilteils am Gestell 11 hervorragt und in Fahrtrichtung beabstandet ist von der ersten Achse 6, insbesondere und auch vom Antriebsrad 2. An der weiteren vierten Achse 9 ist eine weitere zweite Schwinge 8 drehbar gelagert. Diese weitere zweite Schwinge 8 ist somit in einer Ebene drehbar, welche die Querrichtung zur Fahrtrichtung des Mobilteils enthält und die horizontale Richtung.

An der weiteren zweiten Schwinge 8 sind weitere, voneinander beabstandete Stützrollen 7 drehbar gelagert. Vorzugsweise ist die Drehachse der weiteren Stützrollen 7 parallel zur ersten Achse 6.

Ein Lenken des Mobilteils ist durch unterschiedliche Drehzahlen der beiden vorzugsweise zueinander koaxial angeordneten Antriebsräder 2 ermöglicht.

Die beiden zweiten Achsen 9 sind in Querrichtung voneinander beabstandet. Ebenso sind die beiden zweiten Schwingen 8 in Querrichtung voneinander beabstandet.

Bei weiteren erfindungsgemäßen Ausführungsbeispielen werden eine oder mehrere der Stützrollen 3 und 7 ersetzt durch Lenkrollen, so dass eine jeweilige Lenkrolle an einer jeweiligen Einheit drehbar gelagert ist. wobei die Einheit um eine Achse drehbar gelagert ist, welche parallel zur horizontalen Richtung ausgerichtet ist. je nach Fahrbewegung des Mobilteils richten sich somit die Lenkrollen aus.

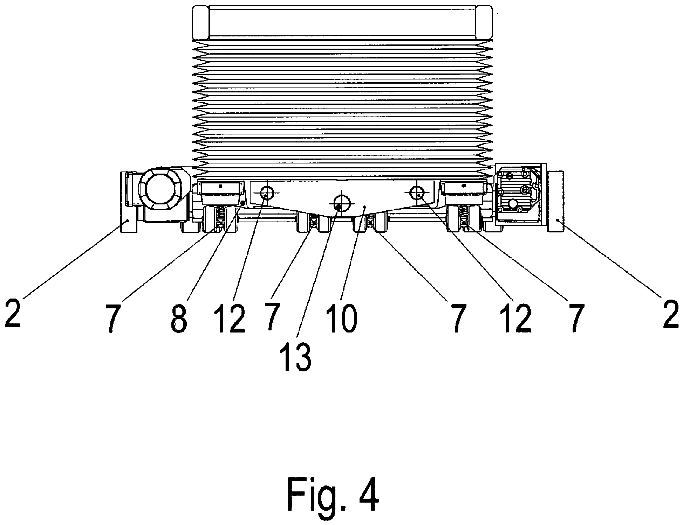

Wie in Figur 4 gezeigt, sind bei diesem erfindungsgemäßen Ausführungsbeispiel nach Figur 4 die zweiten
Schwingen 8 an zweiten Achsen 12 gelagert, die nicht fest zum Gestell 11 angeordnet sind sondern an einer dritten Schwinge 10 drehbar gelagert sind, die wiederum an einer dritten Achse 13 drehbar gelagert ist, welche am Gestell 11 festgelegt ist und parallel zur Fahrtrichtung ausgerichtet ist. Somit ist eine vorteilhafte Dreipunktlagerung ausbildbar.

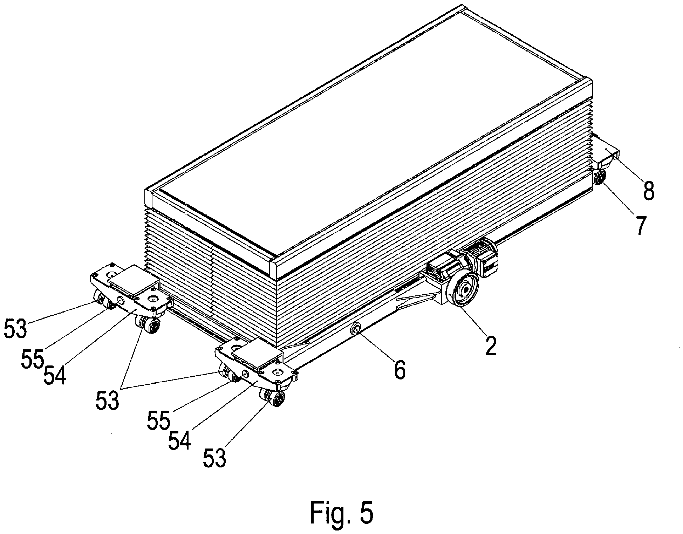

Wie in Figur 5 gezeigt, sind auch an der in Fahrtrichtung vorderen Seite des Mobilteils Stützrollen 53 an Schwingen 54 anordenbar, die an Achsen 55 drehbar gelagert sind, wobei die Achsen am Gestell 11 festgelegt sind und in Fahrtrichtung ausgerichtet sind.

Die Stützrollen 53 sind dabei wiederum als Lenkrollen ausführbar.

### Bezugszeichenliste

1 erste Schwinge
2 Antriebsrad
3 Stützrolle
4 dritte Schwinge
5 dritte Achse
6 erste Achse
7 Stützrolle
8 zweite Schwinge
9 vierte Achse
10 dritte Schwinge
11 Gestell, insbesondere Lastaufnahmemittel
12 zweite Achse
53 Stützrolle
54 Schwinge
55 Achse

## Patentansprüche

1. Mobilteil, insbesondere auf einer Verfahrfläche bewegbares Mobilteil,
wobei das Mobilteil ein Gestell (11), insbesondere Lastaufnahmemittel, aufweist,
**wobei** am Gestell (11) eine erste Achse (6) angeordnet oder ausgebildet ist,
an welcher eine erste Schwinge (1) drehbar gelagert ist,
wobei an der ersten Schwinge (1) eine Antriebseinheit und eine Rolleneinheit angeordnet ist,
wobei die Rolleneinheit von der ersten Achse (6) beabstandet ist und die Antriebseinheit von der ersten Achse (6) beabstandet ist,
wobei die erste Achse (6) an der ersten Schwinge (1) zwischen der Antriebseinheit und der Rolleneinheit angeordnet ist,
wobei die Antriebseinheit ein von einem Elektromotor direkt oder über ein Getriebe angetriebenes Antriebsrad (2) aufweist,
wobei die Rolleneinheit eine drehbar gelagerte Stützrolle (3, 7, 53) oder Lenkrolle aufweist,
**dadurch gekennzeichnet, dass**
**am Gestell (11) zumindest eine dritte Achse (13) angeordnet ist, an welcher eine dritte Schwinge (10) drehbar gelagert ist, an welcher zwei voneinander beabstandet zweite Achsen (12) angeordnet sind, insbesondere wobei die dritte Achse (13) an der dritten Schwinge (10) zwischen den beiden zweiten Achsen (12) angeordnet ist,**
**wobei an jeder zweiten Achse (12) jeweils eine zweite Schwinge (8) drehbar gelagert ist, wobei zwei voneinander beabstandete zweite Rolleneinheiten an der zweiten Schwinge (8) angeordnet, insbesondere befestigt, sind, wobei die zweite Achse (12) an der zweiten Schwinge (8) zwischen den beiden zweiten Rolleneinheiten angeordnet ist,**
**wobei jede der beiden zweiten Rolleneinheiten jeweils eine drehbar gelagerte Stützrolle (3, 7, 53) oder Lenkrolle aufweist.**

2. Mobilteil nach Anspruch 1,
**dadurch gekennzeichnet, dass**
die jeweilige Rolleneinheit außerhalb des Gestells (11) angeordnet ist, insbesondere in Fahrtrichtung außerhalb des Gestells (11) angeordnet ist,
oder dass
der Elektromotor und das Antriebsrad (2) außerhalb des Gestells (11) angeordnet ist, insbesondere in Querrichtung zur Fahrtrichtung außerhalb des Gestells (11) angeordnet ist.

3. Mobilteil nach einem der vorangegangenen Ansprüche,
**dadurch gekennzeichnet, dass**
**die zweite Achse (12) in Querrichtung, also senkrecht, zur ersten Achse (6) gerichtet ist und/oder wobei die zweite Schwinge beabstandet ist von dem Antriebsrad (2) und/oder wobei das Antriebsrad (2) zwischen der zweiten Achse (12) und der an der ersten Schwinge (1) direkt angeordneten oder mittels der weiteren Schwinge angeordneten Rolleneinheit angeordnet ist.**

4. Mobilteil nach einem der vorangegangenen Ansprüche,
**dadurch gekennzeichnet, dass**
**die dritte Achse (13) und die zweite Achse (12) in Querrichtung, also senkrecht, zur ersten Achse (6) gerichtet** sind **und/oder wobei die zweite Schwinge (8) beabstandet von dem Antriebsrad (2)** ist **und/oder wobei das Antriebsrad (2) zwischen der zweiten Achse (12) und der an der ersten Schwinge (1) direkt angeordneten oder mittels der weiteren Schwinge (54) angeordneten Rolleneinheit angeordnet ist.**

5. Mobilteil nach einem der vorangegangenen Ansprüche,
**dadurch gekennzeichnet, dass**
die jeweilige Rolleneinheit an der Unterseite der jeweiligen Schwinge (1) angeordnet ist.

6. Mobilteil nach einem der vorangegangenen Ansprüche,
**dadurch gekennzeichnet, dass**
die oder die jeweilige Rolleneinheit eine Aufnahmeeinheit aufweist, an welcher die Stützrolle (3, 7, 53) drehbar gelagert aufgenommen ist und die Aufnahmeeinheit an der ersten Schwinge (1) befestigt ist,
oder dass
die Rolleneinheit Aufnahmeeinheit aufweist, an welcher eine Lenkeinheit, insbesondere um eine horizontale Achse (6), drehbar gelagert aufgenommen ist, in welcher die Lenkrolle drehbar gelagert aufgenommen ist.

7. Mobilteil nach einem der vorangegangenen Ansprüche,
**dadurch gekennzeichnet, dass**
auf dem Gestell (11) eine von einem Linearaktor oder Linearantrieb höhenverstellbar, insbesondere also rein vertikal verstellbar, angeordnete Aufnahmeplatte angeordnet ist,
insbesondere wobei die vertikale Richtung senkrecht zur dritten Achse (5) ausgerichtet ist und/oder senkrecht zur Drehachse des Antriebsrads (2) ausgerichtet ist.

8. Mobilteil nach einem der vorangegangenen Ansprüche,
**dadurch gekennzeichnet, dass**
die jeweilige Schwinge (1) aus Stahl gefertigt ist.

9. Mobilteil nach einem der vorangegangenen Ansprüche,
**dadurch gekennzeichnet, dass**
der Elektromotor Servomotor oder Synchronmotor ist und einen Winkelsensor zur Erfassung der Drehlage des Rotors des Elektromotors aufweist.

10. Mobilteil nach einem der vorangegangenen Ansprüche,
**dadurch gekennzeichnet, dass**
das Getriebe ein Winkelgetriebe ist.

## Claims

1. Mobile component, in particular a mobile component that can move on a travel surface,
the mobile component having a frame (11), in particular a load-accommodating means,
a first spindle (6) being arranged or formed on the frame (11), and a first rocker (1) being rotatably mounted on said spindle,
a drive unit and a roller unit being arranged on the first rocker (1),
the roller unit being spaced apart from the first spindle (6), and the drive unit being spaced apart from the first spindle (6),
the first spindle (6) being arranged on the first rocker (1) between the drive unit and the roller unit,
the drive unit having a driving wheel (2) that is driven by an electric motor either directly or by means of a gearing,
the roller unit having a rotatably mounted supporting roller (3, 7, 53) or steering roller, **characterised in that**
there is arranged on the frame (11) at least one third spindle (13), on which a third rocker (10) is rotatably mounted, on which two spaced-apart second spindles (12) are arranged, the third spindle (13) in particular being arranged on the third rocker (10) between the two second spindles (12),
a respective second rocker (8) being rotatably mounted on each second spindle (12), two spaced-apart second roller units being arranged on the second rocker (8), in particular being fastened thereto, the second spindle (12) being arranged on the second rocker (8) between the two second roller units,
each of the two second roller units having a respective rotatably mounted supporting roller (3, 7, 53) or steering roller.

2. Mobile component according to claim 1,
**characterised in that**
each roller unit is arranged outside the frame (11), in particular is arranged outside the frame (11) in the direction of travel,
or **in that**
the electric motor and the driving wheel (2) are arranged outside the frame (11), in particular are arranged outside the frame (11) in the transverse direction in relation to the direction of travel.

3. Mobile component according to any of the preceding claims,
**characterised in that**
the second spindle (12) points in the transverse direction in relation to the first spindle (6), i.e. perpendicularly thereto, and/or the second rocker being spaced apart from the driving wheel (2), and/or the driving wheel (2) being arranged between the second spindle (12) and the roller unit, which is arranged on the first rocker (1) either directly or by means of the further rocker.

4. Mobile component according to any of the preceding claims,
**characterised in that**
the third spindle (13) and the second spindle (12) point in the transverse direction in relation to the first spindle (6), i.e. perpendicularly thereto, and/or the second rocker (8) being spaced apart from the driving wheel (2), and/or the driving wheel (2) being arranged between the second spindle (12) and the roller unit, which is arranged on the first rocker (1) either directly or by means of the further rocker (54).

5. Mobile component according to any of the preceding claims,
**characterised in that**
each roller unit is arranged on the underside of the respective rocker (1).

6. Mobile component according to any of the preceding claims,
**characterised in that**
the or each roller unit has an accommodating unit on which the supporting roller (3, 7, 53) is accommodated in a rotatably mounted manner, and the accommodating unit is fastened to the first rocker (1)
or **in that**
the roller unit has an accommodating unit on which a steering unit is accommodated in a manner mounted rotatably, in particular about a horizontal spindle (6), the steering roller being accommodated in said steering unit in a rotatably mounted manner.

7. Mobile component according to any of the preceding claims,
**characterised in that**
an accommodating plate is arranged on the frame (11) and arranged so that it can be adjusted in height by a linear actuator or linear drive, i.e. in particular so that it can be adjusted solely in a vertical manner,
the vertical direction in particular being oriented perpendicularly to the third spindle (5) and/or perpendicularly to the rotational axis of the driving wheel (2).

8. Mobile component according to any of the preceding claims,
**characterised in that**
each rocker (1) is made of steel.

9. Mobile component according to any of the preceding claims,
**characterised in that**
the electric motor is a servomotor or a synchronous motor and has an angle sensor for detecting the rotational position of the rotor of the electric motor.

10. Mobile component according to any of the preceding claims,
**characterised in that**
the gearing is a bevel gear.

## Revendications

1. Elément mobile, notamment élément mobile apte à se mouvoir sur une surface de déplacement,
lequel élément mobile est muni d'un châssis (11), en particulier d'un moyen de réception de charges,
un premier axe (6), sur lequel un premier bras oscillant (1) est monté à rotation,
étant disposé ou ménagé sur ledit châssis (11),
sachant qu'une unité d'entraînement et une unité de roulement sont implantées sur ledit premier bras oscillant (1),
l'unité de roulement étant espacée du premier axe (6), et l'unité d'entraînement étant espacée dudit premier axe (6),
lequel premier axe (6) est interposé, sur ledit premier bras oscillant (1), entre ladite unité d'entraînement et ladite unité de roulement,
l'unité d'entraînement étant pourvue d'une roue d'entraînement (2) menée directement par un moteur électrique, ou par l'intermédiaire d'une transmission,
l'unité de roulement étant dotée d'une roulette d'appui (3, 7, 53) ou roulette directrice montée à rotation,
**caractérisé par**
la présence, sur le châssis (11), d'au moins un troisième axe (13)
sur lequel est monté, à rotation, un troisième bras oscillant (10) sur lequel sont disposés deux deuxièmes axes (12) distants l'un de l'autre, sachant notamment que ledit troisième axe (13) est interposé entre les deux deuxièmes axes (12), sur le troisième bras oscillant (10),
un deuxième bras oscillant (8) étant, à chaque fois, monté à rotation sur chaque deuxième axe (12), sachant que deux secondes unités de roulement, distantes l'une de l'autre, sont implantées et notamment fixées sur ledit deuxième bras oscillant (8), et sachant que le deuxième axe (12) est interposé entre les deux secondes unités de roulement, sur ledit deuxième bras oscillant (8),
chacune desdites deux secondes unités de roulement étant dotée, à chaque fois, d'une roulette d'appui (3, 7, 53) ou roulette directrice montée à rotation.

2. Elément mobile selon la revendication 1,
**caractérisé par le fait que**
l'unité de roulement considérée est placée à l'extérieur du châssis (11), notamment à l'extérieur dudit châssis (11) dans la direction de déplacement ;
ou **par le fait que**
le moteur électrique et la roue d'entraînement (2) sont placés à l'extérieur du châssis (11), notamment à l'extérieur dudit châssis (11) dans la direction transversale par rapport à la direction de déplacement.

3. Elément mobile selon l'une des revendications précédentes,
**caractérisé par le fait que**
le deuxième axe (12) est orienté dans la direction transversale, c'est-à-dire perpendiculairement au premier axe (6), et/ou le deuxième bras oscillant est espacé de la roue d'entraînement (2), et/ou ladite roue d'entraînement (2) est interposée entre ledit deuxième axe (12) et l'unité de roulement qui est directement placée sur le premier bras oscillant (1), ou implantée au moyen du bras oscillant supplémentaire.

4. Elément mobile selon l'une des revendications précédentes,
**caractérisé par le fait que**
le troisième axe (13) et le deuxième axe (12) sont orientés dans la direction transversale, c'est-à-dire perpendiculairement au premier axe (6),
et/ou le deuxième bras oscillant (8) est espacé de la roue d'entraînement (2),
et/ou ladite roue d'entraînement (2) est interposée entre ledit deuxième axe (12) et l'unité de roulement qui est directement placée sur le premier bras oscillant (1), ou implantée au moyen du bras oscillant supplémentaire (54).

5. Elément mobile selon l'une des revendications précédentes,
**caractérisé par le fait que**
l'unité de roulement considérée est placée à la face inférieure du bras oscillant (1) respectif.

6. Elément mobile selon l'une des revendications précédentes,
**caractérisé par le fait que**
l'unité de roulement, voire l'unité de roulement considérée est dotée d'une unité de réception sur laquelle la roulette d'appui (3, 7, 53) est montée à rotation, et ladite unité de réception est fixée au premier bras oscillant (1) ;
ou **par le fait que**
l'unité de roulement est pourvue d'une unité de réception sur laquelle une unité de braquage est montée à rotation, en particulier autour d'un axe horizontal (6), et dans laquelle la roulette directrice est logée avec montage rotatif.

7. Elément mobile selon l'une des revendications précédentes,
**caractérisé par le fait**
**qu'**une platine réceptrice réglable en hauteur à l'aide d'un actionneur linéaire ou d'un entraînement linéaire, c'est-à-dire agencée avec faculté de réglage vertical au sens propre, en particulier, est implantée sur le châssis (11),
sachant notamment que la direction verticale est orientée perpendiculairement au troisième axe (13),
et/ou orientée perpendiculairement à l'axe de rotation de la roue d'entraînement (2).

8. Elément mobile selon l'une des revendications précédentes,
**caractérisé par le fait que**
le bras oscillant (1) considéré est fabriqué en acier.

9. Elément mobile selon l'une des revendications précédentes,
**caractérisé par le fait que**
le moteur électrique est un servomoteur ou un moteur synchrone, et est équipé d'un capteur angulaire conçu pour détecter la position que le rotor dudit moteur électrique a prise par rotation.

10. Elément mobile selon l'une des revendications précédentes,
**caractérisé par le fait que**
la transmission est une transmission à renvoi d'angles.
